# EUROPÄISCHE PATENTSCHRIFT

(11) **EP 2 627 902 B1**
(45) Veröffentlichungstag und Bekanntmachung des Hinweises auf die Patenterteilung: **14.10.2015**
(21) Anmeldenummer: 12728187.1
(22) Anmeldetag: 14.06.2012
(51) Int. Cl.: F01K 25/10, F22B 1/00, F03G 6/00

(54) **SOLARWÄRMENUTZSYSTEM**
SYSTEM FOR UTILISING SOLAR HEAT
SYSTÈME UTILISANT LA CHALEUR SOLAIRE

(30) Priorität: 16.06.2011 DE 102011106583
(43) Veröffentlichungstag der Anmeldung: 21.08.2013
(73) Patentinhaber: SteamDrive GmbH, 89522 Heidenheim (DE)
(72) Erfinder: BERGER, Jürgen, 89547 Gerstetten (DE); BARTOSCH, Stephan, 89192 Rammingen (DE)
(74) Vertreter: Dr. Weitzel & Partner
(86) Internationale Anmeldenummer: PCT/EP2012/002506
(87) Internationale Veröffentlichungsnummer: WO 2012/171642

(56) Entgegenhaltungen:
- WO-A1-85/00855
- WO-A2-2007/046855
- WO-A2-2010/022184
- WO-A2-2010/067359
- US-A- 4 262 735
- US-A- 5 775 107
- US-A1- 2008 041 054

## Beschreibung

Die vorliegende Erfindung betrifft ein Solarwärmenutzsystem, im Einzelnen gemäß dem Oberbegriff von Anspruch 1, sowie ein Verfahren zum Betreiben eines Solarwärmenutzsystems gemäß dem Oberbegriff von Anspruch 8.

Solarwärmenutzsysteme sind in verschiedenen Ausführungsformen bekannt. Zum einen nutzen dezentrale Solarwärmenutzsysteme, die über thermische Sonnenkollektoren verfügen, die Sonnenenergie, um ein Heizmedium aufzuheizen, das wiederum Brauchwasser oder Heizungswasser für eine Gebäudeversorgung erwärmt. Dementsprechend sind die Solarkollektoren dieser Solarwärmenutzsysteme in der Regel auf Gebäudedächern installiert und versorgen ausschließlich das entsprechende Gebäude mit Heizwärme.

Die anderen bekannten zentralen Solarwärmenutzsysteme nutzen einen thermischen Solarkollektor, der vergleichsweise wesentlich mehr Sonnenergie absorbiert als die Solarkollektoren der genannten dezentralen Solarwärmenutzsysteme, wobei hier ebenfalls mittels der absorbierten Sonnenenergie ein Heizmedium aufgeheizt wird, das wiederum ein Expansionsmedium in einem Sekundärkreislauf verdampft, indem die Wärme des Heizmediums aus dem Heizmediumkreislauf über einen Wärmetauscher oder eine Vielzahl von Wärmetauschern auf das Expansionsmedium des Sekundärkreislaufes übertragen wird. In dem Sekundärkreislauf ist eine Dampfturbine angeordnet, in welcher das Expansionsmedium unter Verrichtung mechanischer Arbeit expandiert. Die Dampfturbine treibt einen elektrischen Generator zur Gewinnung elektrischer Energie an. Solche Solarwärmenutzsysteme kommen beispielsweise in sogenannten Parabolrinnenkraftwerken, Fresnel-Kollektoranlagen oder Solarturmkraftwerken zum Einsatz und haben eine Leistung von mehreren zehn oder hundert Megawatt.

Bei den erstgenannten Solarwärmenutzsystemen ist nachteilig, dass sie keine mechanische Leistung zur Verfügung stellen, um beispielsweise Strom erzeugen zu können. Die zweitgenannten Solarwärmenutzsysteme eignen sich aufgrund der hohen Investitionskosten, des Platzbedarfs und des Wartungsaufwandes nur zur kommerziellen zentralen Stromversorgung. Außerdem sind sie auf konstante Randbedingungen ausgelegt und wartungsintensiv.

Zum druckschriftlichen Stand der Technik wird auf das folgende Dokument verwiesen:
WO 85/00855 A1 offenbart ein Solarwärmenutzsystem gemäß dem Oberbegriff von Anspruch 1.

Der vorliegende Erfindung liegt die Aufgabe zugrunde, ein Solarwärmenutzsystem anzugeben, das eine kostengünstige, kompakte und für den dezentralen Einsatz geeignete Struktur aufweist und die Verrichtung mechanischer Arbeit, insbesondere zur Erzeugung elektrischen Stroms, ermöglicht.

Die erfindungsgemäße Aufgabe wird durch ein Solarwärmenutzsystem mit den Merkmalen von Anspruch 1 und ein Verfahren mit den Merkmalen von Anspruch 8 gelöst. In den abhängigen Ansprüchen sind vorteilhafte und besonderes zweckmäßige Ausgestaltungen der Erfindung angegeben.

Das erfindungsgemäße Solarwärmenutzsystem weist wenigstens einen thermischen Solarkollektor, in der Regel eine Vielzahl solcher thermischer Solarkollektoren, auf, der/die Sonnenenergie absorbiert/absorbieren und mittels der absorbierten Sonnenenergie ein Heizmedium aufheizt/aufheizen. Das Heizmedium wird in einem Heizmediumkreislauf umgewälzt, in der Regel mittels einer Pumpe, die meist elektrisch angetrieben wird.

Erfindungsgemäß ist im Solarwärmenutzsystem eine Kolbenexpansionsmaschine vorgesehen. Die Kolbenexpansionsmaschine ist gemäß einer ersten Ausführungsform unmittelbar in dem Heizmediumkreislauf angeordnet und von dem Heizmedium durchströmt. Das Heizmedium wird vorteilhaft ausschließlich oder teilweise mittels der im thermischen Solarkollektor absorbierten Sonnenenergie verdampft und expandiert in der Kolbenexpansionsmaschine unter Verrichtung mechanischer Arbeit. Die Kolbenexpansionsmaschine kann dann einen elektrischen Generator oder ein anderes Aggregat antreiben.

Gemäß einer alternativen Ausführungsform ist ein Sekundärkreislauf vorgesehen, in dem ein Expansionsmedium umgewälzt wird. Die mittels des wenigstens einen thermischen Solarkollektor absorbierte Sonnenenergie wird mittels des Heizmediums über einen Wärmetauscher zwischen dem Heizmediumkreislauf und dem Sekundärkreislauf auf das Expansionsmedium übertragen. Vorteilhaft wird das Expansionsmedium dabei teilweise oder vollständig verdampft. Anschließend strömt das Expansionsmedium in die in dem Sekundärkreislauf angeordnete Kolbenexpansionsmaschine und expandiert in dieser unter Verrichtung mechanischer Arbeit. Auch hier kann die Kolbenexpansionsmaschine entsprechend einen elektrischen Generator oder ein anderes Aggregat antreiben.

Von Vorteil ist es, wenn auch die Pumpe im Heizmediumkreislauf von der Kolbenexpansionsmaschine angetrieben wird, da dann ein gesonderter elektrischer Antrieb für diese entfallen kann. Wenn jedoch ein Umwälzen des Heizmediums im Heizmediumkreislauf auch bei ausgeschalteter Kolbenexpansionsmaschine möglich sein soll, wird die Pumpe im Heizmediumkreislauf zusätzlich oder alternativ von einem Motor, insbesondere Elektromotor, angetrieben.

Ein mit der Kolbenexpansionsmaschine verbundener elektrischer Generator kann beispielsweise an einem Stromnetz eines Energieversorgungsunternehmens angeschlossen sein, um die von ihm erzeugte elektrische Leistung beziehungsweise die elektrische Energie in dieses Stromnetz einzuspeisen, meist gegen Zahlung einer Vergütung. Alternativ kann die elektrische Energie in einem elektrischen Speicher des Solarwärmenutzsystems gespeichert werden, um später lokal genutzt zu werden.

Als Heizmedium und/oder Expansionsmedium kommt beispielsweise Wasser, Ethanol, Ammoniak oder ein Gemisch mit einer oder mehrerer dieser Komponenten in Betracht. Alternative Stoffe, beispielsweise ionische Flüssigkeiten in Betracht.

Gemäß der erfindungsgemäßen Ausführungsform ist das Solarwärmenutzsystem mit verschiedenen Heizmedien betreibbar, da die erfindungsgemäße Kolbenexpansionsmaschine im Gegensatz zu Dampfturbinen äußerst geringe Anforderungen an die Stoffeigenschaften des Heizmediums beziehungsweise Expansionsmediums und andere Randbedingungen stellt. So ist eine Heizmediumwechseleinrichtung mit zwei Heizmediumvorratsbehältern, die zueinander verschiedene Heizmedien aufnehmen, vorgesehen, mit welcher der Heizmediumkreislauf in einem ersten Betriebszustand, insbesondere im sogenannten Simmerbetrieb, mit einem ersten Heizmedium beschickbar ist, und in einem zweiten Betriebszustand, insbesondere im sogenannten Winterbetrieb, mit einem zweiten vom ersten Heizmedium verschiedenen Heizmedium beschickbar ist. Das erste Heizmedium kann dann in dem ersten Heizmediumvorratsbehälter bevorratet sein und das zweite Heizmedium kann im dem zweiten Heizmediumvorratsbehälter bevorratet sein. Eine geeignete Schaltvorrichtung ermöglicht, dass der Heizmediumkreislauf entweder aus dem ersten Heizmediumvorratsbehälter oder aus dem zweiten Heizmediumvorratsbehälter gespeist wird.

Das erste Heizmedium kann beispielsweise Wasser oder ein Wassergemisch sein und das zweite Heizmedium kann beispielsweise Ammoniak oder Ethanol oder ein Gemisch mit wenigstens einem dieser beiden Stoffe sein. Andere Stoffe sind natürlich möglich.

Ein erfindungsgemäßes Verfahren zum Betreiben eines erfindungsgemäßen Solarwärmenutzsystems sieht das Umwälzen eines Heizmediums in dem Heizmediumkreislauf vor, wobei das Heizmedium in dem thermischen Solarkollektor Sonnenenergie absorbiert. Gemäß der ersten erfindungsgemäßen Ausgestaltung wird das Heizmedium dadurch vorteilhaft teilweise oder vollständig verdampft und expandiert anschließend in der Kolbenexpansionsmaschine. Gemäß der zweiten erfindungsgemäßen Ausführungsform überträgt das Heizmedium seine aufgenommene Sonnenenergie mittels eines Wärmetauschers auf das Expansionsmedium des Sekundärkreislaufes, wobei das Expansionsmedium hierbei vorteilhaft teilweise oder vollständig verdampft und anschließend unter Verrichtung mechanischer Arbeit in der Kolbenexpansionsmaschine expandiert.

Erfindungsgemäß wird nun der Heizmediumkreislauf alternierend mit zwei zueinander verschiedenen Heizmedien betrieben, beispielsweise in dem genannten ersten Betriebszustand - Sommerbetrieb - mit Wasser oder einem Wassergemisch und in dem genannten zweiten Betriebszustand - Winterbetrieb - mit Ethanol, Ammoniak oder einem Gemisch mit wenigstens einem dieser beiden Stoffe. Auch hier können alternative Stoffe, beispielsweise ionische Flüssigkeiten als Heizmedium und/oder Expansionsmedium, in Betracht kommen.

Die Erfindung soll nachfolgend anhand von Ausführungsbeispielen und den Figuren exemplarisch erläutert werden.

Es zeigen:
- Figur 1: eine erste Ausführungsform der Erfindung mit einer sogenannten Direktverdampfung;
- Figur 2: ein Ausführungsbeispiel mit einem Heizmediumkreislauf und einem Sekundärkreislauf.

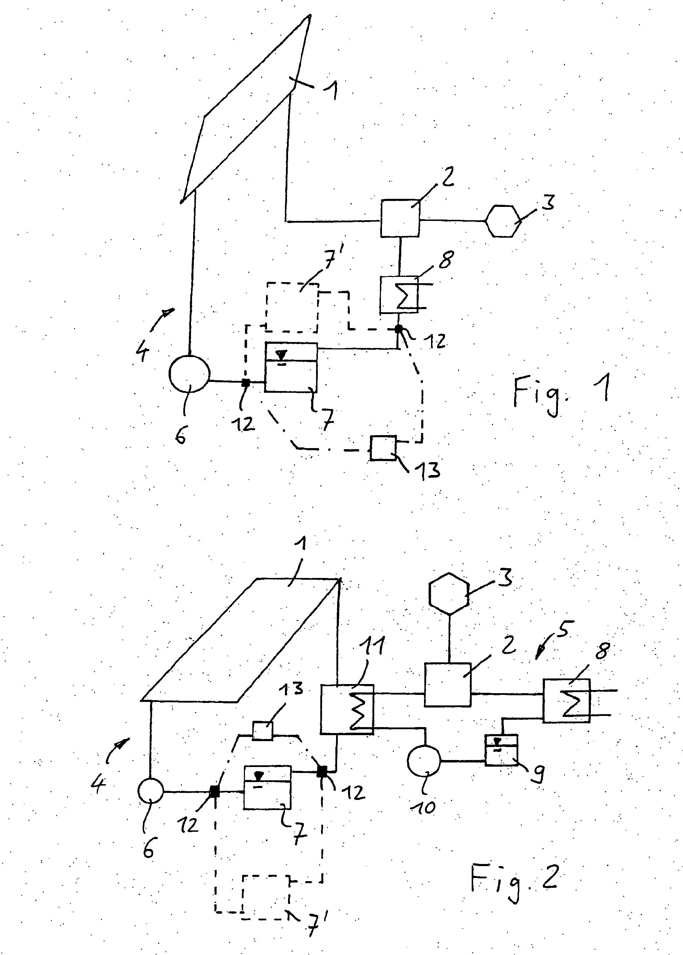

Bei den in den Figuren 1 und 2 dargestellten Solarwärmenutzsystemen ist der Solarkollektor mit dem Bezugszeichen 1 bezeichnet und die Kolbenexpansionsmaschine mit dem Bezugszeichen 2. Die Kolbenexpansionsmaschine 2 treibt in den dargestellten Ausführungsbeispielen jeweils einen elektrischen Generator 3 an.

Bei beiden Ausführungsformen ist ein Heizmediumkreislauf 4 vorgesehen, der gemäß der Ausführungsform in der Figur 1 der einzige Heizmediumkreislauf zur Nutzung der Sonnenenergie in einer Kolbenexpansionsmaschine ist, wohingegen bei der Ausführungsform gemäß der Figur 2 die Kolbenexpansionsmaschine 2 in einem Sekundärkreislauf 5 vorgesehen ist.

In beiden Ausführungsbeispielen wird das Heizmedium mittels einer Pumpe 6 im Heizmediumkreislauf 4 umgewälzt und es ist jeweils ein Heizmediumvorratsbehälter 7 im Heizmeidumkreislauf 4 vorgesehen, aus welchem die Pumpe 6 das Heizmedium in den thermischen Solarkollektor 1 pumpt Gegebenenfalls könnte ein solcher Heizmediumvorratsbehälter 7 auch eingespart werden.

Bei der Ausführungsform gemäß der Figur 1 ist das Heizmedium zugleich das in der Kolbenexpansionsinaschine 2 unter Verrichtung mechanischer Arbeit expandierende Medium. In Strömungsrichtung des Heizmediums hinter der Kolbenexpansionsmaschine 2 ist im Heizmediumkreislauf 4 ein Kondensator 8 zur Kondensation des Heizmediums vorgesehen, bevor dieses zurück in den Heizmediumvorratsbehälter 7 beziehungsweise zur Pumpe 6 strömt.

Bei der Ausführungsform gemäß der Figur 2 ist der Kondensator 8 entsprechend im Sekundärkreislauf 5 in Strömungsrichtung des Expansionsmediums hinter der Kolbenexpansionsmaschine 2 vorgesehen. Aus dem Kondensator 8 strömt das Expansionsmedium entweder in einen Expansionsmediumvorratsbehälter 9, wie hier dargestellt, oder gleich in die Expansionsmediumpumpe 10, die gegebenenfalls jedoch auch eingespart werden könnte.

Zur Übertragung der Wärme des Heizmediums aus dem Heizmediumkreislauf 4 auf das Expansionsmedium des Sekundärkreislaufes 5 ist ein Wärmetauscher 11 vorgesehen. Selbstverständlich wäre es auch möglich, eine andere Anzahl von Wärmetauschern entsprechend vorzusehen, parallel zueinander geschaltet oder ein Reihe zueinander geschaltet.

In beiden Ausführungsbeispielen ist exemplarisch ferner ein zweiter Heizmediumvorratsbehälter 7' dargestellt. Über Ventile 12 vor und hinter beiden Heizmediumvorratsbehältern 7, 7' kann die Versorgung des Heizmediumkreislaufes 4 wahlweise auf einen der beiden Heizmediumvorratsbehälter 7, 7' umgestellt werden. Bei Bedarf ist eine entsprechende Heizmediumwechseleinrichtung 13 vorgesehen, die auf die Ventile 12 steuernd zugreift und diese in Abhängigkeit vorgegebener Randbedingungen, beispielsweise der Umgebungstemperatur, schaltet.

Restwärme aus der Kondensation, auch als Kondensationswärme bezeichnet, kann gemäß einer besonders günstigen Ausführungsform der Erfindung für eine sogenannte Wärmekopplung genutzt werden. Bei einer solchen Wärmekopplung wird die im Kondensator, insbesondere dem hier gezeigten Kondensator 8, anfallende Kondensationswärme einer Heizungsanlage beispielsweise zur Raumheizung eines Gebäudes und/oder zur Aufheizung von Brauchwasser zugeführt.

## Patentansprüche

1. Solarwärmenutzsystem
1.1 mit wenigstens einem thermischen Sonnenkollektor (1), der mittels der absorbierten Sonnenergie ein Heizmedium aufheizt; wobei
1.2 das Heizmedium in einem Heizmediumkreislauf (4) umgewälzt wird; wobei
1.3 eine Kolbenexpansionsmaschine (2) vorgesehen ist, welche unmittelbar in dem Heizmediumkreislauf (4) angeordnet und vom Heizmedium durchströmt ist oder in einem Sekundärkreislauf (5) von einem im Sekundärkreislauf umgewälzten Expansionsmedium, das über einen Wärmetauscher (11) mit dem Heizmedium in wärmeübertragender Verbindung steht, durchströmt angeordnet ist, und
1.4 das Heizmedium oder das Expansionsmedium in der Kolbenexpansionsmaschine (2) unter Verrichtung mechanischer Arbeit expandiert;
**dadurch gekennzeichnet, dass**
das Solarwärmenutzsystem eine Heizmediumwechseleinrichtung (13) mit zwei Heizmediumvorratsbehältern (7, 7'), die zueinander verschiedene Heizmedien aufnehmen, umfasst, mit welcher der Heizmediumkreislauf in einem ersten Betriebszustand, mit einem ersten Heizmedium beschickbar ist, und in einem zweiten Betriebszustand mit einem zweiten vom ersten Heizmedium verschiedenen Heizmedium beschickbar ist.

2. Solarwärmenutzsystem gemäß Anspruch 1, **dadurch gekennzeichnet, dass** die Kolbenexpansionsmaschine (2) in einer Triebverbindung mit einem elektrischen Generator (3) zur Erzeugung elektrischer Energie steht.

3. Solarwärmenutzsystem gemäß Anspruch 2, **dadurch gekennzeichnet, dass** der elektrische Generator (3) an einem Stromnetz eines Energieversorgungsunternehmens und/oder einem elektrischen Speicher zur Speicherung elektrischer Energie angeschlossen ist.

4. Solarwärmenutzsystem gemäß einem der Ansprüche 1 bis 3, **dadurch gekennzeichnet, dass** das Heizmedium und/oder das Expansionsmedium Wasser, Ethanol, Ammoniak oder ein Gemisch mit einer oder mehrerer dieser Komponenten ist.

5. Solarwärmenutzsystem gemäß einem der Ansprüche 1 bis 4, **dadurch gekennzeichnet, dass** das erste Heizmedium Wasser oder ein Wassergemisch ist und das zweite Heizmedium Ammoniak oder Ethanol oder ein Gemisch mit wenigstens einem dieser Stoffe ist.

6. Solarwärmenutzsystem gemäß einem der Ansprüche 1 bis 5, **dadurch gekennzeichnet, dass** ein Kondensator (8) in Strömungsrichtung des Heizmediums oder Expansionsmediums hinter der Kolbenexpansionsmaschine (2) vorgesehen ist, in welchem das Heizmedium oder Expansionsmedium unter Abgabe von Wärme kondensiert, wobei dem Kondensator (8) eine Wärmenutzeinrichtung, insbesondere eine Heizungsanlage oder eine Brauchwasseranlage derart zugeordnet ist, dass die Kondensationswärme in die Wärmenutzeinrichtung, insbesondere zur Aufheizung von Heizungswasser oder zur Aufheizung von Brauchwasser, übertragen wird.

7. Verfahren zum Betreiben eines Solarwärmenutzsystems gemäß einem der Ansprüche 1 bis 6 mit den folgenden Schritten:
7.1 Umwälzen eines Heizmediums in dem Heizmediumkreislauf (4), wobei dieses in dem thermischen Solarkollektor (1) Sonnenenergie absorbiert und diese in dem Wärmetauscher (11) auf das Expansionsmedium, welches in der Kolbenexpansionsmaschine (2) unter Verrichtung mechanischer Arbeit expandiert, überträgt oder selbst in der Kolbenexpansionsmaschine (2) unter Verrichtung mechanischer Arbeit expandiert;
**dadurch gekennzeichnet, dass**
7.2 der Heizmediumkreislauf (4) alternierend mit zwei zueinander verschiedenen Heizmedien betrieben wird.

8. Verfahren gemäß Anspruch 7, **dadurch gekennzeichnet, dass** der Heizmediumkreislauf (4) alternierend mit Wasser oder einem Wassergemisch als erstes Heizmedium und mit Ammoniak oder Ethanol oder einem Gemisch mit wenigstens einem dieser Stoffe als zweites Heizmedium betrieben wird.

9. Verfahren gemäß einem der Ansprüche 7 oder 8, **dadurch gekennzeichnet, dass** das Heizmedium oder das Expansionsmedium nach seiner Expansion in der Kolbenexpansionsmaschine (2) in einem Kondensator (8) kondensiert wird und die dabei abgeführte Kondensationswärme zur Wärmekopplung verwendet wird, insbesondere zum Aufheizen von Brauchwasser oder zum Aufheizen von Heizwasser in einer Heizungsanlage.

## Claims

1. A system for utilising solar heat,
1.1 comprising at least one thermal solar collector (1) which absorbs solar energy to heat up a heating medium, wherein
1.2 the heating medium is circulated in a heating medium circuit (4), wherein
1.3 a piston expansion machine (2) is provided, which is arranged directly in the heating medium circuit (4) and in which the heating medium flows, or is arranged in a secondary circuit (5) having an expansion medium which flows through said secondary circuit, which expansion medium is circulated in said secondary circuit and is in thermally-transferring contact with the heating medium via a heat exchanger (11), and
1.4 the heating medium or the expansion medium expands in the piston expansion machine (2) with mechanical work being performed, **characterized in that**
the system for utilising solar heat comprises a heating medium changing device (13) with two heating medium storage vessels (7, 7') which accommodate mutually different heating media, with which the heating medium circuit can be supplied with a first heating medium in a first operating state and with a second heating medium that differs from the first heating medium in a second operating state.

2. A system for utilising solar heat according to claim 1, **characterized in that** the piston expansion machine (2) is in drive connection with an electric generator (3) for generating electrical power.

3. A system for utilising solar heat according to claim 2, **characterized in that** the electric generator (3) is connected to the power grid of a power supply enterprise and/or an electrical storage unit for storing electrical power.

4. A system for utilising solar heat according to one of the claims 1 to 3, **characterized in that** the heating medium and/or the expansion medium is water, ethanol, ammonia or a mixture with one or several of said components.

5. A system for utilising solar heat according to one of claims 1 to 4, **characterized in that** the first heating medium is water or a water mixture, and the second heating medium is ammonia or ethanol or a mixture with at least one of said substances.

6. A system for utilising solar heat according to one of the claims 1 to 5, **characterized in that** a condenser (8) is provided in the direction of flow of the heating medium or expansion medium behind the piston expansion machine (2), in which the heating medium or expansion medium condenses under delivery of heat, wherein the condenser (8) is assigned to a heat utilisation device, especially a heating system or a service water system, such that the condensation heat is transferred to the heat utilisation device, especially for heating heating water or for heating service water.

7. A method for operating a system for utilising solar heat according to one of the claims 1 to 6, comprising the following steps:
7.1 circulating a heating medium in the heating medium circuit (4), wherein said medium absorbs solar energy in the thermal solar collector (1) and transfers said energy in the heat exchanger (11) to the expansion medium, which expands in the piston expansion machine (2) with mechanical work being performed, or expands itself in the piston expansion machine (2) with mechanical work being performed;
**characterized in that**
7.2 the heating medium circuit (4) is operated in an alternating manner with two heating media which are different from each other.

8. A method according to claim 7, **characterized in that** the heating medium circuit (4) is operated in an alternating manner with water or a water mixture as a first heating medium and with ammonia or ethanol or a mixture with at least one of said substances as a second heat medium.

9. A method according to one of the claims 7 or 8, **characterized in that** the heating medium or the expansion medium condenses in a condenser (8) after its expansion in the piston expansion machine (2) and the thus discharged condensation heat is used for heat coupling, especially for heating service water or for heating heating water in a heating system.

## Revendications

1. Système d'utilisation de la chaleur solaire
1.1 avec au moins un collecteur solaire thermique (1) qui chauffe un fluide caloporteur au moyen de l'énergie solaire absorbée,
1.2 le fluide caloporteur étant mis en circulation dans un circuit de fluide caloporteur (4),
1.3 dans lequel est prévue une machine à expansion à pistons (2) qui est disposée directement dans le circuit de fluide caloporteur (4) et qui est parcourue par le fluide caloporteur ou parcourue dans un circuit secondaire (5) par un fluide d'expansion mis en circulation dans le circuit secondaire, qui est en liaison avec transmission de chaleur par l'intermédiaire d'un échangeur de chaleur (11) avec le fluide caloporteur, et
1.4 dans lequel le fluide caloporteur ou le fluide d'expansion se dilate dans la machine à expansion à pistons (2) en produisant un travail mécanique, **caractérisé en ce que** le système d'utilisation de la chaleur solaire comprend un dispositif de changement de fluide caloporteur (13) avec deux réservoirs de fluide caloporteur (7, 7') contenant des fluides caloporteurs différents, avec lequel le circuit de fluide caloporteur peut être rempli d'un premier fluide caloporteur dans un premier état de fonctionnement et avec un deuxième fluide caloporteur différent dans un deuxième état de fonctionnement.

2. Système d'utilisation de la chaleur solaire selon la revendication 1, **caractérisé en ce que** la machine à expansion à pistons (2) est en liaison motrice avec un générateur électrique (3) pour la génération d'énergie électrique.

3. Système d'utilisation de la chaleur solaire selon la revendication 2, **caractérisé en ce que** le générateur électrique (3) est raccordé à un réseau électrique d'une entreprise de fourniture d'électricité et/ou à un accumulateur électrique pour l'accumulation d'énergie électrique.

4. Système d'utilisation de la chaleur solaire selon l'une des revendications 1 à 3, **caractérisé en ce que** le fluide caloporteur et/ou le fluide d'expansion sont de l'eau, de l'éthanol, de l'ammoniaque ou un mélange avec un ou plusieurs de ces composants.

5. Système d'utilisation de la chaleur solaire selon l'une des revendications 1 à 4, **caractérisé en ce que** le premier fluide caloporteur est de l'eau ou un mélange d'eau et le deuxième fluide caloporteur est de l'ammoniaque ou de l'éthanol ou un mélange avec au moins une de ces substances.

6. Système d'utilisation de la chaleur solaire selon l'une des revendications 1 à 5, **caractérisé en ce qu'**il est prévu un condenseur (8) dans le sens d'écoulement du fluide caloporteur ou du fluide d'expansion après la machine à expansion à pistons (2), dans lequel le fluide caloporteur ou le fluide d'expansion se condense en dégageant de la chaleur, le condenseur (8) étant associé à un dispositif d'utilisateur de la chaleur, en particulier une installation de chauffage ou une installation d'eau industrielle, de telle manière que la chaleur de condensation soit transmise au dispositif d'utilisation de la chaleur, en particulier pour le chauffage d'eau de chauffage ou d'eau industrielle.

7. Procédé de pilotage d'un système d'utilisation de la chaleur solaires selon l'une des revendications 1 à 6, comprenant les étapes suivantes :
7.1 mise en circulation dans le circuit de fluide caloporteur (4) d'un fluide caloporteur qui absorbe de l'énergie solaire dans le collecteur solaire thermique (1) et la communique dans l'échangeur de chaleur (11) au fluide d'expansion, qui se dilate dans la machine à expansion à pistons (2) en produisant un travail mécanique, ou se dilate lui-même dans la machine à expansion à pistons (2) en produisant un travail mécanique ;
**caractérisé en ce que**
7.2 le circuit de fluide caloporteur (4) fonctionne alternativement avec deux fluides caloporteurs différents.

8. Procédé selon la revendication 7, **caractérisé en ce que** le circuit de fluide caloporteur (4) fonctionne alternativement avec de l'eau ou un mélange d'eau servant de premier fluide caloporteur et avec de l'ammoniaque ou de l'éthanol ou un mélange avec au moins une de ces substances servant de deuxième fluide caloporteur.

9. Procédé selon l'une des revendications 7 ou 8, **caractérisé en ce que** le fluide caloporteur ou le fluide d'expansion, après son expansion dans la machine à expansion à pistons (2), est condensé dans un condenseur (8) et la chaleur de condensation évacuée alors est utilisée pour la cogénération de chaleur, en particulier pour chauffer de l'eau industrielle ou pour chauffer de l'eau de chauffage dans une installation de chauffage.
